# EUROPEAN PATENT APPLICATION

(11) **EP 4 393 660 A1**
(43) Date of publication of application: **03.07.2024**
(21) Application number: 22861475.6
(22) Date of filing: 26.08.2022
(51) Int. Cl.: B25J 13/08, G05B 19/4155

(54) **TRAINED MODEL GENERATION METHOD, TRAINED MODEL GENERATION DEVICE, TRAINED MODEL, AND DEVICE FOR ESTIMATING MAINTENANCE STATE**

(30) Priority: 27.08.2021 JP 2021139421
(71) Applicant: Kyocera Corporation, Kyoto-shi Kyoto 612-8501 (JP)
(72) Inventor: ASATANI Minami, Kyoto-shi, Kyoto 612-8501 (JP)
(74) Representative: TBK
(86) International application number: PCT/JP2022/032290
(87) International publication number: WO 2023/027187

(57) **Abstract**

A trained model includes a class inference model, a first holding mode inference model, and a second holding mode inference model. The class inference model is configured to infer, based on an inference image of a holding target object, a classification result obtained by classifying the holding target object into a predetermined holding category. The first holding mode inference model is configured to infer, based on the classification result and the inference image, a first holding mode for the holding target object. The second holding mode inference model is configured to infer, based on the first holding mode and the inference image, a second holding mode for the holding target object. A trained model generation method includes generating a trained model by performing learning using learning data including a learning image of a learning target object corresponding to a holding target object.

## Description

### CROSS-REFERENCE TO RELATED APPLICATIONS

This application claims priority based on Japanese Patent Application No. 2021-139421 filed in Japan on August 27, 2021, the entire disclosure of which is incorporated herein by reference.

### TECHNICAL FIELD

The present disclosure relates to a trained model generation method, a trained model generation device, a trained model, and a holding mode inference device.

### BACKGROUND OF INVENTION

A method for appropriately holding an object having a certain shape by a robot hand is known (see, for example, Patent Literature 1).

### CITATION LIST

### PATENT LITERATURE

Patent Literature 1: Japanese Unexamined Patent Application Publication No. 2005-169564

### SUMMARY

In a trained model generation method according to an embodiment of the present disclosure, a trained model includes a class inference model, a first holding mode inference model, and a second holding mode inference model. The class inference model infers, based on an inference image of a holding target object to be held by a robot, a classification result obtained by classifying the holding target object into a predetermined holding category. The first holding mode inference model infers, based on the classification result and the inference image, a first holding mode for the holding target object. The second holding mode inference model infers, based on the first holding mode and the inference image, a second holding mode for the holding target object. The trained model generation method includes generating the trained model by performing learning using learning data including a learning image of a learning target object corresponding to the holding target object.

In a trained model generation device according to an embodiment of the present disclosure, a trained model includes a class inference model, a first holding mode inference model, and a second holding mode inference model. The class inference model infers, based on an inference image of a holding target object to be held by a robot, a classification result obtained by classifying the holding target object into a predetermined holding category. The first holding mode inference model infers, based on the classification result and the inference image, a first holding mode for the holding target object. The second holding mode inference model infers, based on the first holding mode and the inference image, a second holding mode for the holding target object. The trained model generation device generates the trained model by performing learning using learning data including a learning image of a learning target object corresponding to the holding target object.

A trained model according to an embodiment of the present disclosure includes a class inference model, a first holding mode inference model, and a second holding mode inference model. The class inference model infers, based on an inference image of a holding target object to be held by a robot, a classification result obtained by classifying the holding target object into a predetermined holding category. The first holding mode inference model infers, based on the classification result and the inference image, a first holding mode for the holding target object. The second holding mode inference model infers, based on the first holding mode and the inference image, a second holding mode for the holding target object.

A holding mode inference device according to an embodiment of the present disclosure infers, using a trained model, a mode in which a robot holds a target object. The trained model includes a class inference model, a first holding mode inference model, and a second holding mode inference model. The class inference model infers, based on an inference image of a holding target object to be held by the robot, a classification result obtained by classifying the holding target object into a predetermined holding category. The first holding mode inference model infers, based on the classification result and the inference image, a first holding mode for the holding target object. The second holding mode inference model infers, based on the first holding mode and the inference image, a second holding mode for the holding target object.

### BRIEF DESCRIPTION OF THE DRAWINGS

FIG. 1 is a block diagram illustrating an example configuration of a trained model generation device according to an embodiment.
FIG. 2 is a schematic view illustrating an example configuration of a robot control system according to an embodiment.
FIG. 3 is a diagram illustrating an example of a model that is being trained.
FIG. 4 is a diagram illustrating an example configuration in which a first model and a second model each include a Non-G model and a Grasp model.
FIG. 5 is a diagram illustrating an example of a holding mode inference model.
FIG. 6 is a diagram illustrating an example configuration of determining a holding mode by a trained model.
FIG. 7 is a diagram illustrating an example configuration of determining a holding mode by a holding mode inference model.
FIG. 8A is a view illustrating an example of a grasping position when a target object is classified into a first class.
FIG. 8B is a view illustrating an example of a grasping position when a target object is classified into a second class.
FIG. 8C is a view illustrating an example of a grasping position when a target object is classified into a third class.
FIG. 9A is a view illustrating an example of a grasping position determined when a target object is classified into a first class.
FIG. 9B is a view illustrating an example of a grasping position determined when a target object is classified into a second class.
FIG. 9C is a view illustrating an example of a grasping position determined when a target object is classified into a third class.
FIG. 10 is a view illustrating an example of a target object image.
FIG. 11 is a view illustrating an example image of Non-G output and Grasp output of a first model and a second model.

### DESCRIPTION OF EMBODIMENTS

In a trained model that receives an image of an object and outputs a holding mode for the object, there is a demand for increasing the accuracy of inferring the holding mode for the object. A trained model generation method, a trained model generation device, a trained model, and a holding mode inference device according to an embodiment of the present disclosure can increase the accuracy of inferring a holding mode for an object.

### (Example configuration of robot control system 100)

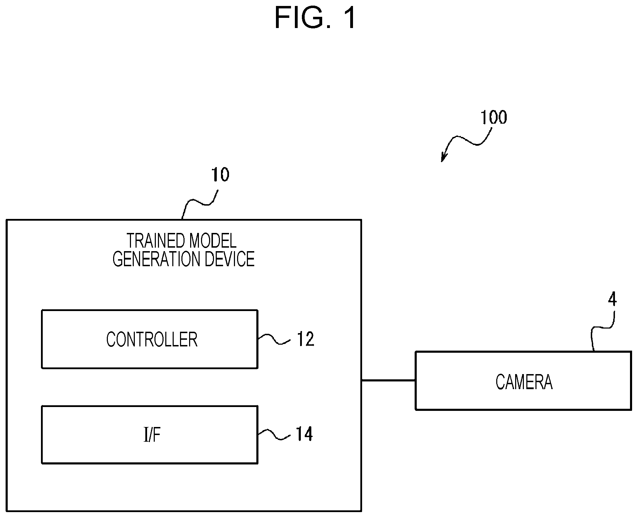

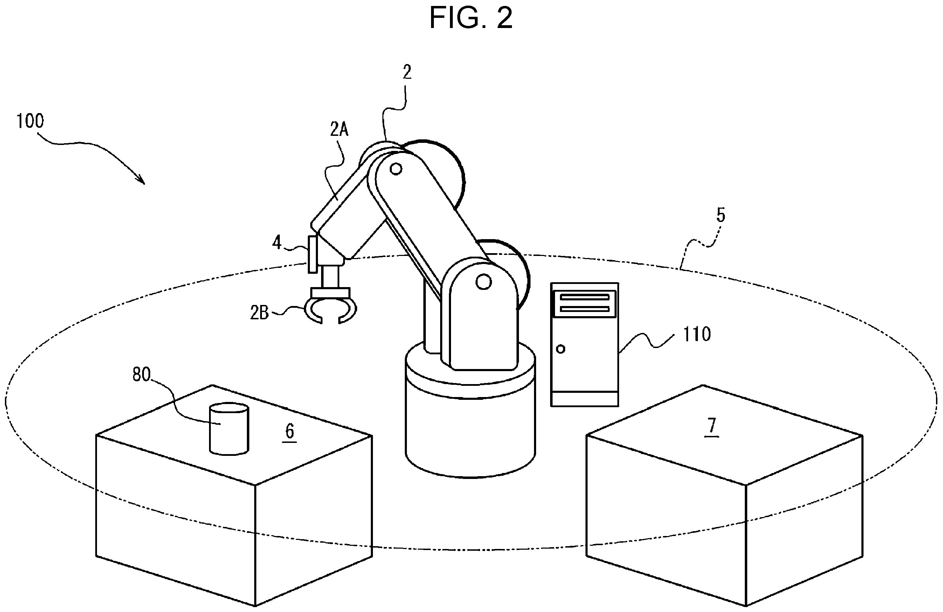

As illustrated in FIG. 1 and FIG. 2, a robot control system 100 according to an embodiment of the present disclosure includes a robot 2, a robot control device 110, a trained model generation device 10, and a camera 4. The robot 2 holds, by an end effector 2B, a holding target object 80 and performs work. The holding target object 80 is also simply referred to as a target object. The robot control device 110 controls the robot 2. The trained model generation device 10 generates a trained model to be used to determine a mode in which the robot 2 holds the holding target object 80. The mode in which the robot 2 holds the holding target object 80 is also simply referred to as a holding mode. The holding mode includes a position at which the robot 2 touches the holding target object 80, a force to be applied to the holding target object 80 by the robot 2, or the like.

As illustrated in FIG. 2, in the present embodiment, the robot 2 holds the holding target object 80 at a work start point 6. That is, the robot control device 110 controls the robot 2 to hold the holding target object 80 at the work start point 6. The robot 2 may move the holding target object 80 from the work start point 6 to a work target point 7. The holding target object 80 is also referred to as a work target. The robot 2 operates within an operation range 5.

### <Robot 2>

The robot 2 includes an arm 2A and the end effector 2B. The arm 2A may be, for example, a six-axis or seven-axis vertical articulated robot. The arm 2A may be a three-axis or four-axis horizontal articulated robot or a SCARA robot. The arm 2Amay be a two-axis or three-axis orthogonal robot. The arm 2A may be a parallel link robot or the like. The number of axes constituting the arm 2A is not limited to that illustrated. In other words, the robot 2 includes the arm 2A connected by multiple joints, and is operated by driving the joints.

The end effector 2B may include, for example, a grasping hand configured to grasp the holding target object 80. The grasping hand may include multiple fingers. The number of fingers of the grasping hand may be two or more. Each finger of the grasping hand may include one or more joints. The end effector 2B may include a suction hand configured to suck and hold the holding target object 80. The end effector 2B may include a scooping hand configured to scoop and hold the holding target object 80. The end effector 2B is also referred to as a holding portion that holds the holding target object 80. The end effector 2B is not limited to these examples, and may be configured to perform other various operations. In the configuration illustrated in FIG. 1, the end effector 2B includes a grasping hand.

The robot 2 is capable of controlling the position of the end effector 2B by operating the arm 2A. The end effector 2B may include a shaft serving as reference of a direction in which the end effector 2B acts on the holding target object 80. When the end effector 2B includes a shaft, the robot 2 is capable of controlling the direction of the shaft of the end effector 2B by operating the arm 2A. The robot 2 controls the start and end of an operation in which the end effector 2B acts on the holding target object 80. The robot 2 controls the operation of the end effector 2B while controlling the position of the end effector 2B or the direction of the shaft of the end effector 2B, thereby being capable of moving or processing the holding target object 80. In the configuration illustrated in FIG. 1, the robot 2 causes the end effector 2B to hold the holding target object 80 at the work start point 6, and moves the end effector 2B to the work target point 7. The robot 2 causes the end effector 2B to release the holding target object 80 at the work target point 7. In this way, the robot 2 is capable of moving the holding target object 80 from the work start point 6 to the work target point 7.

### <Sensor>

The robot control system 100 further includes a sensor. The sensor detects physical information of the robot 2. The physical information of the robot 2 may include information regarding the actual positions or postures of individual components of the robot 2 or the speeds or accelerations of the individual components of the robot 2. The physical information of the robot 2 may include information regarding forces that act on the individual components of the robot 2. The physical information of the robot 2 may include information regarding a current that flows through a motor that drives the individual components of the robot 2 or a torque of the motor. The physical information of the robot 2 represents a result of an actual operation of the robot 2. That is, the robot control system 100 acquires the physical information of the robot 2 and thereby being capable of grasping a result of an actual operation of the robot 2.

The sensor may include a force sensor or a tactile sensor that detects, as physical information of the robot 2, a force, a distributed pressure, a slip, or the like acting on the robot 2. The sensor may include a motion sensor that detects, as the physical information of the robot 2, the position or posture of the robot 2 or the speed or acceleration of the robot 2. The sensor may include a current sensor that detects, as the physical information of the robot 2, a current flowing through a motor that drives the robot 2. The sensor may include a torque sensor that detects, as the physical information of the robot 2, a torque of a motor that drives the robot 2.

The sensor may be installed at a joint of the robot 2 or a joint driving unit that drives the j oint. The sensor may be installed at the arm 2A or the end effector 2B of the robot 2.

The sensor outputs detected physical information of the robot 2 to the robot control device 110. The sensor detects and outputs the physical information of the robot 2 at a predetermined timing. The sensor outputs the physical information of the robot 2 as time-series data.

### <Camera 4>

In the example configuration illustrated in FIG. 1, the robot control system 100 includes the camera 4 attached to the end effector 2B of the robot 2. For example, the camera 4 may photograph the holding target object 80 in a direction from the end effector 2B toward the holding target object 80. That is, the camera 4 photographs the holding target object 80 in a direction in which the end effector 2B holds the holding target object 80. An image captured by photographing the holding target object 80 in the direction in which the end effector 2B holds the holding target object 80 is also referred to as a holding target image (inference image). The inference image is an image for inferring a holding target and includes the holding target object 80. The camera 4 may include a depth sensor and may be configured to be capable of acquiring depth data of the holding target object 80. The depth data is data regarding distances in individual directions within the range of the angle of view of the depth sensor. More specifically, the depth data is information regarding the distance from the camera 4 to a measurement point. The image captured by the camera 4 may include monochrome brightness information or color brightness information represented by red, green, and blue (RGB) or the like. The number of cameras 4 is not limited to one, and may be two or more.

The camera 4 is not limited to the configuration of being attached to the end effector 2B, and may be provided at any position at which the camera 4 is capable of photographing the holding target object 80. In a configuration in which the camera 4 is attached to a structure other than the end effector 2B, the above-described holding target image may be generated based on an image captured by the camera 4 attached to the structure. The holding target image may be generated by performing image conversion based on the relative position and relative posture of the end effector 2B with respect to the attachment position and attachment posture of the camera 4. Alternatively, the holding target image may be generated using computer-aided design (CAD) and drawing data.

### <Trained model generation device 10>

As illustrated in FIG. 1, the trained model generation device 10 includes a controller 12 and an interface (I/F) 14. The interface 14 acquires information or data from an external device, and outputs information or data to an external device. The interface 14 acquires learning data. The interface 14 acquires, as learning data, an image (learning image) obtained by photographing the holding target object 80 (learning target object) by the camera 4 and class information of the holding target object 80. The learning image is an image of a learning target object. The controller 12 performs learning based on the learning data and generates a trained model used for determining a holding mode for the holding target object 80 in the robot control device 110. The controller 12 outputs the generated trained model to the robot control device 110 via the interface 14.

The controller 12 may include at least one processor to provide control and processing capabilities for executing various functions. The processor may execute a program for implementing the various functions of the controller 12. The processor may be implemented as a single integrated circuit. The integrated circuit is also referred to as an IC. The processor may be implemented as multiple communicably connected integrated circuits and discrete circuits. The processor may be implemented based on other various known techniques.

The controller 12 may include a storage unit. The storage unit may include an electromagnetic storage medium such as a magnetic disk, or may include a memory such as a semiconductor memory or a magnetic memory. The storage unit stores various pieces of information. The storage unit stores a program or the like to be executed by the controller 12. The storage unit may be configured as a non-transitory readable medium. The storage unit may function as a work memory of the controller 12. At least a part of the storage unit may be configured separately from the controller 12.

The interface 14 may include a communication device configured to be capable of wired or wireless communication. The communication device may be configured to be capable of communication in a communication scheme based on various communication standards. The communication device can be configured using a known communication technique.

The interface 14 may include an input device that receives an input of information, data, or the like from a user. The input device may include, for example, a touch panel or a touch sensor, or a pointing device such as a mouse. The input device may include a physical key. The input device may include an audio input device such as a microphone. The interface 14 may be configured to be connectable to an external input device. The interface 14 may be configured to acquire information input to the external input device from the external input device.

The interface 14 may include an output device that outputs information, data, or the like to a user. The output device may include, for example, a display device that displays information, data, or the like to a user. The display device may include, for example, a liquid crystal display (LCD), an organic electro-luminescence (EL) display, an inorganic EL display, a plasma display panel (PDP), or the like. The display device is not limited to these displays, and may include other various types of displays. The display device may include a light-emitting device such as a light emission diode (LED) or a laser diode (LD). The display device may include other various devices. The output device may include, for example, an audio output device such as a speaker that outputs auditory information such as voice. The output device may include a vibration device that vibrates to provide tactile information to a user. The output device is not limited to these examples, and may include other various devices. The interface 14 may be configured to be connectable to an external output device. The interface 14 may output information to the external output device so that the external output device outputs the information to a user. The interface 14 may be configured to be connectable to a display device 20, which will be described below, as the external output device.

### <Robot control device 110>

The robot control device 110 determines a holding mode by using a trained model generated by the trained model generation device 10 and controls the robot 2 such that the robot 2 holds the holding target object 80 in the determined holding mode.

The robot control device 110 may include at least one processor to provide control and processing capabilities for executing various functions. The individual components of the robot control device 110 may include at least one processor. Multiple components among the components of the robot control device 110 may be implemented by one processor. The entire robot control device 110 may be implemented by one processor. The processor can execute a program for implementing the various functions of the robot control device 110. The processor may be configured to be the same as or similar to the processor used in the trained model generation device 10.

The robot control device 110 may include a storage unit. The storage unit may be configured to be the same as or similar to the storage unit used in the trained model generation device 10.

### (Example operation of trained model generation device 10)

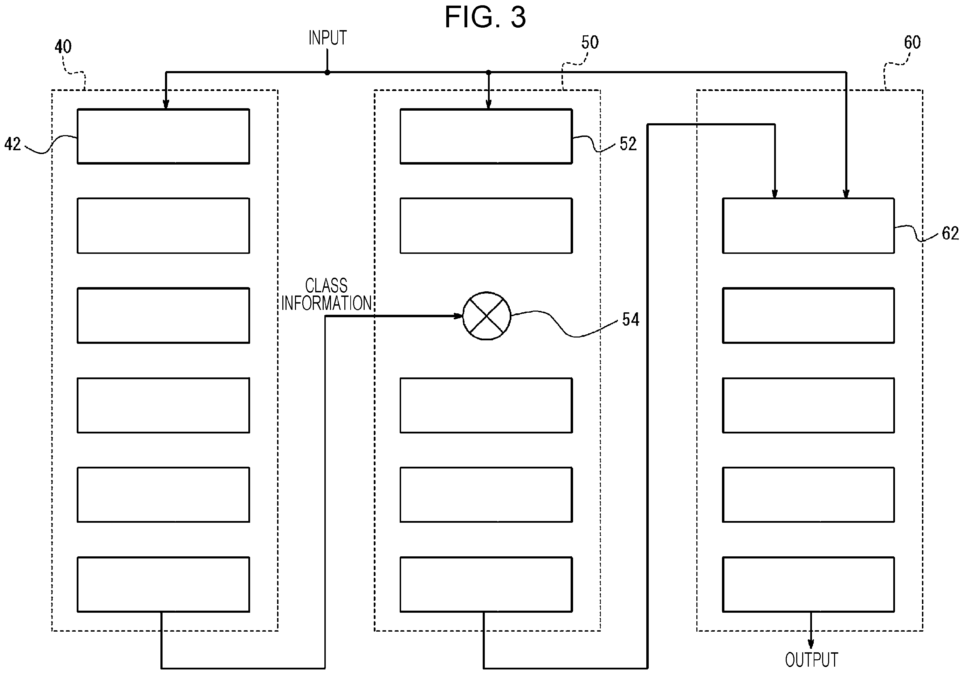

The controller 12 of the trained model generation device 10 performs learning by using, as learning data, an image captured by photographing the holding target object 80 or an image generated from CAD data or the like of the holding target object 80 and class information of the holding target object 80, and generates a trained model for inferring a holding mode for the holding target object 80. The learning data may include teacher data used in so-called supervised learning. The learning data may include data that is used in so-called unsupervised learning and that is generated by a device that performs learning. An image captured by photographing the holding target object 80 or an image generated as an image of the holding target object 80 is collectively referred to as a target object image. As illustrated in FIG. 3, the model includes a class inference model 40, a first holding mode inference model 50, and a second holding mode inference model 60. The controller 12 updates the model being trained by learning using a target object image as learning data, and generates a trained model.

The class inference model 40 receives a target object image as an input. The class inference model 40 infers a holding category into which the holding target object 80 included in the input target object image is to be classified. That is, the class inference model 40 classifies the target object into any one of multiple inferable holding categories. The multiple holding categories that can be inferred by the class inference model 40 are categories outputtable by the class inference model 40. A holding category is a category indicating a difference in the shape of the holding target object 80, and is also referred to as a class.

The class inference model 40 classifies the holding target object 80 included in the input holding target image into a predetermined class. The class inference model 40 outputs, based on the target object image, a classification result obtained by classifying the holding target object 80 into a predetermined class. In other words, the class inference model 40 infers, based on the input target object image, a class to which the holding target object 80 belongs when the holding target object 80 is classified into a class.

The class inference model 40 outputs a class inference result as class information. The class that can be inferred by the class inference model 40 may be determined based on the shape of the holding target object 80. The class that can be inferred by the class inference model 40 may be determined based on various characteristics such as the surface state or the hardness of the holding target object 80. In the present embodiment, the number of classes that can be inferred by the class inference model 40 is four. The four classes are referred to as a first class, a second class, a third class, and a fourth class, respectively. The number of classes may be three or less or may be five or more.

The first holding mode inference model 50 receives, as an input, a target object image and class information output by the class inference model 40. The first holding mode inference model 50 infers, based on the received target object image and class information, a holding mode (first holding mode) for the holding target object 80, and outputs a holding mode inference result.

The second holding mode inference model 60 receives, as an input, a target object image and the inference result output by the first holding mode inference model 50. The second holding mode inference model 60 infers, based on the received target object image and inference result of the first holding mode inference model 50, a holding mode (second holding mode) for the holding target object 80, and outputs a holding mode inference result.

The class inference model 40, the first holding mode inference model 50, and the second holding mode inference model 60 may each be configured as, for example, a convolution neural network (CNN) including multiple layers. The layers of the class inference model 40 are represented as processing layers 42. The layers of the first holding mode inference model 50 are represented as processing layers 52. The layers of the second holding mode inference model 60 are represented as processing layers 62. Information input to the class inference model 40, the first holding mode inference model 50, and the second holding mode inference model 60 is subjected to convolution processing based on a predetermined weighting coefficient in each layer of the CNN. In the learning of the class inference model 40, the first holding mode inference model 50, and the second holding mode inference model 60, the weighting coefficient is updated. The class inference model 40, the first holding mode inference model 50, and the second holding mode inference model 60 may be constituted by VGG16 or ResNet50. The class inference model 40, the first holding mode inference model 50, and the second holding mode inference model 60 are not limited to these examples, and may be configured as other various models.

The first holding mode inference model 50 includes a multiplier 54 that receives an input of class information. The multiplier 54 multiplies the output of the processing layer 52 in the preceding stage by a weighting coefficient based on the class information and outputs a result to the processing layer 52 in the subsequent stage.

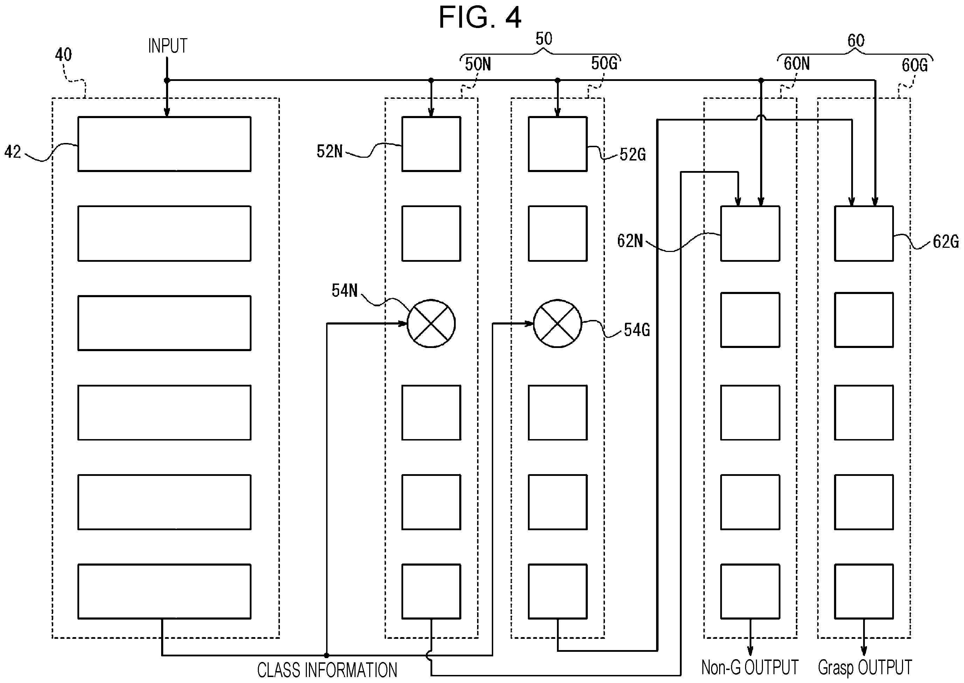

As illustrated in FIG. 4, the first holding mode inference model 50 may include a first Non-G model 50N and a first Grasp model 50G. The first Non-G model 50N includes processing layers 52N and a multiplier 54N. The first Grasp model 50G includes processing layers 52G and a multiplier 54G. The second holding mode inference model 60 may include a second Non-G model 60N and a second Grasp model 60G. The second Non-G model 60N includes processing layers 62N. The second Grasp model 60G includes processing layers 62G.

The first Grasp model 50G and the second Grasp model 60G output an inference result of a holding mode in the mode of a Grasp output. The Grasp output corresponds to the output of the first holding mode inference model 50 and the second holding mode inference model 60. The Grasp output is assumed to be information indicating an inference result of a holding mode for the holding target object 80. The Grasp output may be, for example, information indicating a position to be touched when the holding target object 80 is held. The Grasp output may be represented by an image, for example.

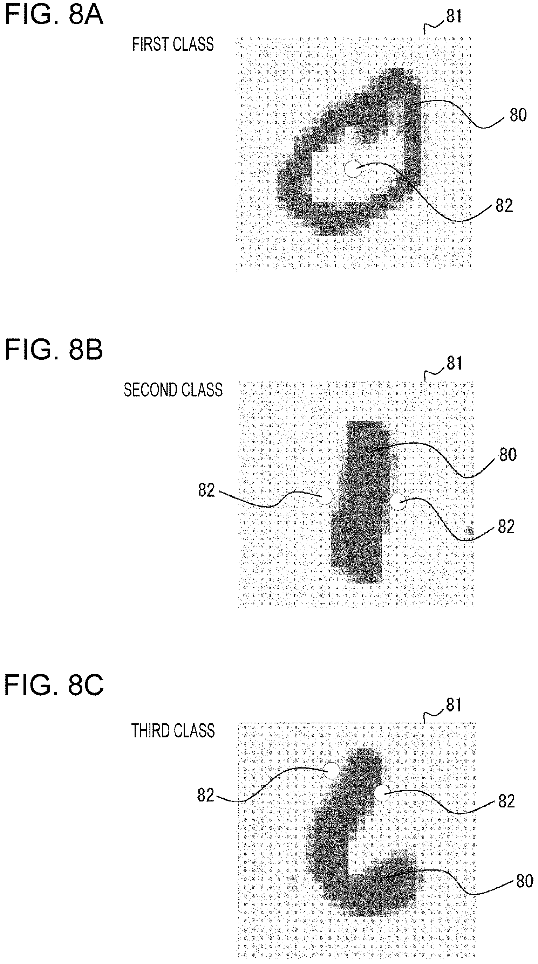

The first Non-G model 50N and the second Non-G model 60N output an inference result of a holding mode in the mode of a Non-G output. The Non-G output is assumed to be information for explaining a reason why the inference result of a holding position 82 (see FIG. 8A, FIG. 8B, FIG. 8C, and so forth) of the holding target object 80 is derived. The Non-G output may be, for example, information indicating a position not to be touched when the holding target object 80 is held. The Non-G output may be represented by an image, for example. The first Non-G model 50N or the second Non-G model 60N is also referred to as a third holding mode inference model.

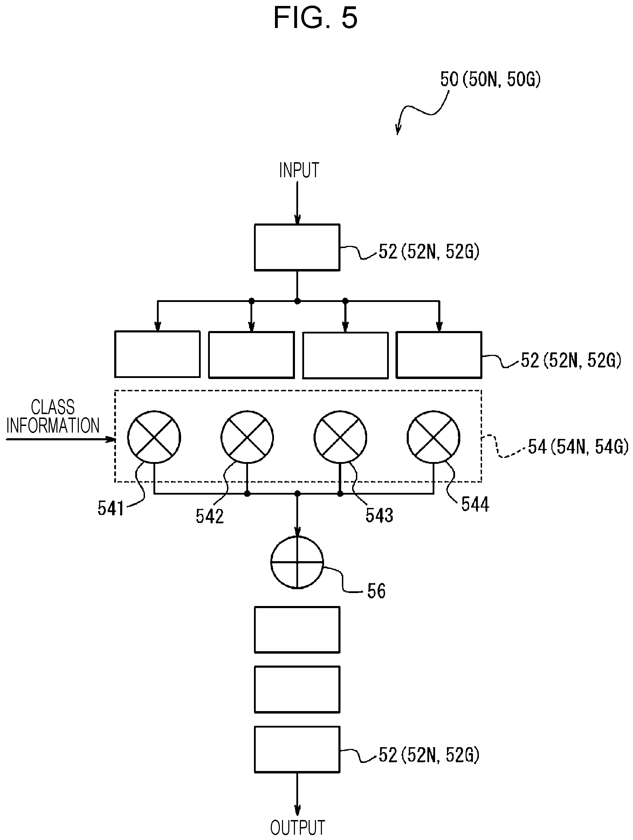

As described above, in the first holding mode inference model 50, the multiplier 54 multiplies, based on class information, the output of the processing layer 52 by a weighting coefficient. In the first Non-G model 50N and the first Grasp model 50G, the multipliers 54N and 54G multiply, based on class information, the outputs of the processing layers 52N and 52G by weighting coefficients, respectively. When the number of classes is four, the first holding mode inference model 50, the first Non-G model 50N, or the first Grasp model 50G branches an input target object image to the processing layers 52, 52N, or 52G corresponding to the four classes, as illustrated in FIG. 5. The multiplier 54, 54N, or 54G includes a first multiplier 541, a second multiplier 542, a third multiplier 543, and a fourth multiplier 544 corresponding to the four classes, respectively. The first multiplier 541, the second multiplier 542, the third multiplier 543, and the fourth multiplier 544 each multiply the output of the processing layer 52, 52N, or 52G corresponding to a corresponding one of the four classes by a weighting coefficient. The first holding mode inference model 50, the first Non-G model 50N, and the first Grasp model 50G each include an adder 56 that adds outputs of the first multiplier 541, the second multiplier 542, the third multiplier 543, and the fourth multiplier 544. The output of the adder 56 is input to the processing layer 52, 52N, or 52G. The first holding mode inference model 50, the first Non-G model 50N, and the first Grasp model 50G each output, as a holding mode inference result, the output of the processing layer 52, 52N, or 52G located subsequent to the adder 56.

The weighting coefficient by which each of the first multiplier 541, the second multiplier 542, the third multiplier 543, and the fourth multiplier 544 multiplies the output of the processing layer 52, 52N, or 52G is determined based on the class information input to the multiplier 54, 54N, or 54G. The class information indicates which of the four classes the holding target object 80 has been classified into. It is assumed that, when the holding target object 80 is classified into the first class, the weighting coefficient of the first multiplier 541 is set to 1, and the weighting coefficients of the second multiplier 542, the third multiplier 543, and the fourth multiplier 544 are set to 0. In this case, the output of the processing layer 52, 52N, or 52G corresponding to the first class is output from the adder 56.

The class information output by the class inference model 40 may represent a probability that the holding target object 80 is classified into each of the four classes. For example, probabilities that the holding target object 80 is classified into the first class, the second class, the third class, and the fourth class may be represented by X1, X2, X3, and X4, respectively. In this case, the adder 56 adds an output obtained by multiplying the output of the processing layer 52, 52N, or 52G corresponding to the first class by X1, an output obtained by multiplying the output of the processing layer 52, 52N, or 52G corresponding to the second class by X2, an output obtained by multiplying the output of the processing layer 52, 52N, or 52G corresponding to the third class by X3, and an output obtained by multiplying the output of the processing layer 52, 52N, or 52G corresponding to the fourth class by X4, and outputs a result of the addition.

The controller 12 performs learning by using a target object image and class information of the holding target object 80 as learning data, thereby generating the class inference model 40, the first holding mode inference model 50, and the second holding mode inference model 60 as a trained model. The class information of the holding target object 80 is given as learning data to the class inference model 40.

The controller 12 requires correct answer data to generate the trained model. For example, to generate the class inference model 40, the controller 12 requires learning data associated with information indicating a correct answer about a class into which an image used as learning data is classified. In addition, to generate the first holding mode inference model 50 and the second holding mode inference model 60, the controller 12 requires learning data associated with information indicating a correct answer about a grasping position of a target object appearing in an image used as learning data.

The trained model used in the robot control system 1 according to the present embodiment may include a model that has learned the class or the grasping position of the holding target object 80 in a target object image through learning, or may include a model that has not learned the class or the grasping position of the holding target object 80. Even when the trained model has not learned the class or the grasping position of the holding target object 80, the controller 12 may infer the class and the grasping position of the holding target object 80 by using a trained model trained based on the class and the grasping position of a learning target object corresponding to the holding target object 80, which is a learning target object having a shape, dimension, or the like similar to that of the holding target object 80, for example. Thus, in the robot control system 1 according to the present embodiment, the controller 12 may or may not learn the holding target object 80 itself to generate a trained model.

### <Inference of holding mode by trained model>

The robot control device 110 determines, based on a trained model, a holding mode for the holding target object 80. The trained model is configured to receive, as an input, an image captured by photographing the holding target object 80, and output an inference result of a holding mode for the holding target object 80. The robot control device 110 acquires an image captured by photographing the holding target object 80 from the camera 4, inputs the image to the trained model, and acquires an inference result of a holding mode for the holding target object 80 from the trained model. The robot control device 110 determines a holding mode based on the inference result of the holding mode for the holding target object 80, and controls the robot 2 such that the robot 2 holds the holding target object 80 in the determined holding mode.

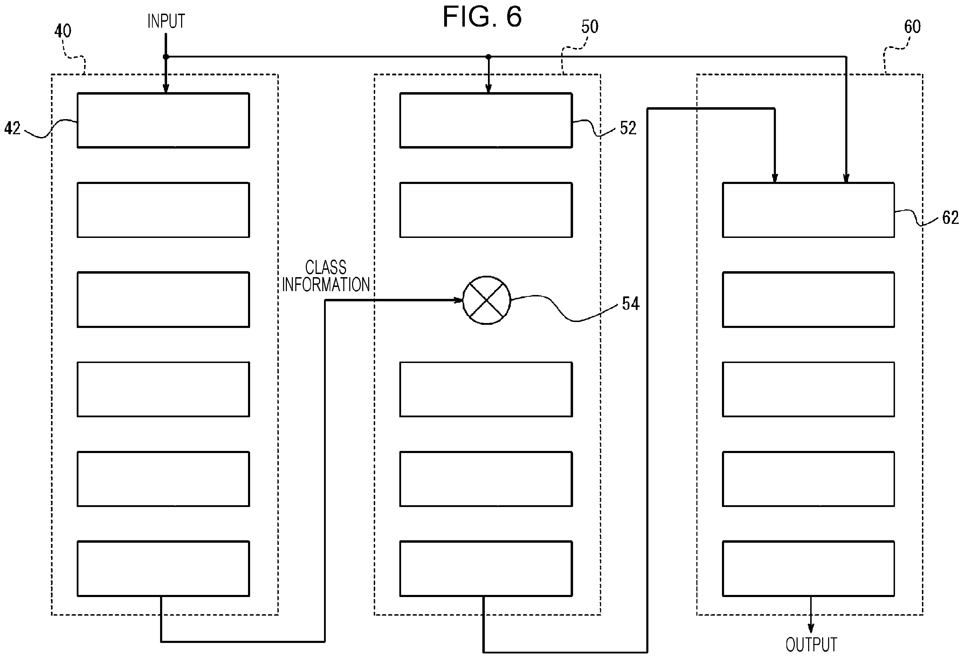

As illustrated in FIG. 6, the robot control device 110 configures a trained model such that the class information from the class inference model 40 is input to the first holding mode inference model 50. The robot control device 110 configures a trained model such that the output of the first holding mode inference model 50 is input to the second holding mode inference model 60.

The robot control device 110 inputs a target object image to the class inference model 40 and causes the class inference model 40 to output class information. The robot control device 110 inputs the target object image to the first holding mode inference model 50, inputs the class information from the class inference model 40 to the first holding mode inference model 50, and causes the first holding mode inference model 50 to output an inference result of a holding mode for the holding target object 80. The robot control device 110 inputs, to the second holding mode inference model 60, the target object image and the inference result of the holding mode obtained by the first holding mode inference model 50, and causes the second holding mode inference model 60 to output an inference result of a holding mode for the holding target object 80. Based on the inference result of the holding mode obtained by the second holding mode inference model 60, the robot control device 110 determines a holding mode for the holding target object 80.

The class information output from the class inference model 40 indicates the class to which the holding target object 80 is classified among the first to fourth classes based on the input target object image. Specifically, it is assumed that the class inference model 40 is configured to output "1000" as the class information when the holding category (class) into which the holding target object 80 is to be classified is inferred as the first class. It is assumed that the class inference model 40 is configured to output "0100" as the class information when the holding category (class) into which the holding target object 80 is to be classified is inferred as the second class. It is assumed that the class inference model 40 is configured to output "0010" as the class information when the holding category (class) into which the holding target object 80 is to be classified is inferred as the third class. It is assumed that the class inference model 40 is configured to output "0001" as the class information when the holding category (class) into which the holding target object 80 is to be classified is inferred as the fourth class.

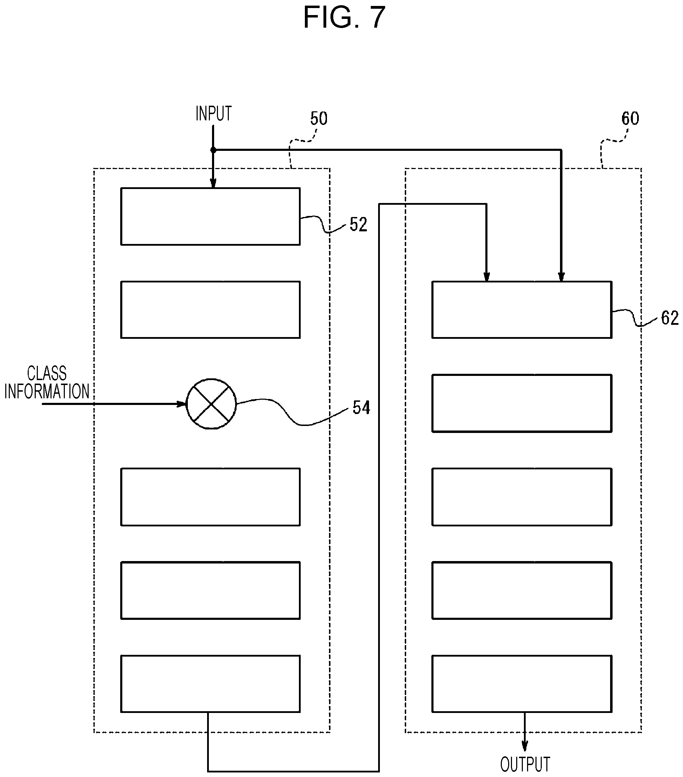

As illustrated in FIG. 7, the robot control device 110 may apply only the first holding mode inference model 50 and the second holding mode inference model 60 as a trained model and directly input the class information to the first holding mode inference model 50.

In the present embodiment, it is assumed that shape images 81 each representing the shape of the holding target object 80 illustrated in FIG. 8A, FIG. 8B, and FIG. 8C are input as target object images to the trained model. In this case, it is assumed that the shape image 81 is classified into a class based on the shape of the holding target object 80. It is assumed that, when the holding target object 80 has an O-shape, the shape image 81 is classified into the first class. It is assumed that, when the holding target object 80 has an I-shape, the shape image 81 is classified into the second class. It is assumed that, when the holding target object 80 has a J-shape, the shape image 81 is classified into the third class. The J-shape can also be regarded as a shape obtained by combining an I-shape and an O-shape. It is assumed that, when the holding target object 80 has another shape, the shape image 81 is classified into the fourth class.

In response to inferring that the shape image 81 is classified into the first class, the class inference model 40 outputs " 1000" as class information. In response to acquiring "1000" as class information, the first holding mode inference model 50 infers, as a holding position 82, an inner side of the O-shaped holding target object 80 in the shape image 81. In response to inferring that the shape image 81 is classified into the second class, the class inference model 40 outputs "0100" as class information. In response to acquiring "0100" as class information, the first holding mode inference model 50 infers, as holding positions 82, positions on both sides of the I-shape near the center of the I-shape in the shape image 81. In response to inferring that the shape image 81 is classified into the third class, the class inference model 40 outputs "0010" as class information. In response to acquiring "0010" as class information, the first holding mode inference model 50 infers, as holding positions 82, positions on both sides of the J-shape near an end of the J-shape in the shape image 81. In other words, the first holding mode inference model 50 infers, as the holding positions 82, positions on both sides of the I-shape near an end of the I-shape far from the O-shape in the shape obtained by combining the I-shape and the O-shape.

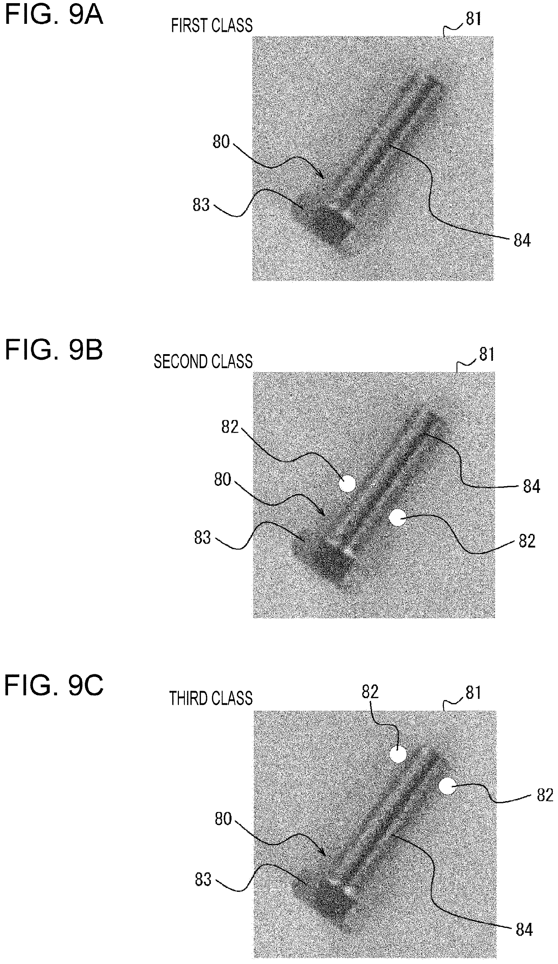

A description will be given of an example in which the robot control device 110 infers the holding position(s) 82 when the holding target object 80 is a screw. As illustrated in FIG. 9A, FIG. 9B, and FIG. 9C, the robot control device 110 inputs, as a target object image, an image of the holding target object 80 which is a screw to the trained model. The screw includes a screw head 83 and a screw shaft 84. When the shape image 81 of the screw is classified into the first class, the trained model is incapable of specifying the position corresponding to the inner side of the screw and is incapable of inferring the holding position 82. Thus, no holding position 82 is indicated in the shape image 81 classified into the first class. When the shape image 81 of the screw is classified into the second class, the trained model infers, as the holding positions 82, both sides of the screw shaft 84 near the center of the screw shaft 84. When the shape image 81 of the screw is classified into the third class, the trained model infers, as the holding positions 82, the positions of both sides of the screw shaft 84 near an end of the screw shaft 84 far from the screw head 83.

### <Conclusion>

As described above, the trained model generation device 10 according to the present embodiment is capable of generating a trained model including the class inference model 40, the first holding mode inference model 50, and the second holding mode inference model 60. The first holding mode inference model 50 infers a holding mode, based on class information. The second holding mode inference model 60 infers a holding mode, not based on class information. Accordingly, the robot control device 110 is capable of determining a holding mode by complementing an inference result based on class information and an inference result not based on class information with each other. As a result, the accuracy of inferring a holding mode for the holding target object 80 can be increased.

The trained model generation device 10 may execute a trained model generation method including a procedure of generating, through learning, a trained model including the class inference model 40, the first holding mode inference model 50, and the second holding mode inference model 60.

The robot control device 110 may infer a holding mode by using the trained model. The robot control device 110 is also referred to as a holding mode inference device.

### (Other embodiments)

Other embodiments will be described below.

### <Examples of another holding mode>

In the above embodiment, the configuration in which a trained model infers the holding position(s) 82 as a holding mode has been described. The trained model is capable of inferring not only the holding position(s) 82 but also another mode as the holding mode.

For example, the trained model may infer, as the holding mode, a force to be applied by the robot 2 to hold the holding target object 80. In this case, the first holding mode inference model 50 and the second holding mode inference model 60 infer and output a force to be applied to hold the holding target object 80.

For example, the trained model may infer, as the holding mode, the type of a hand by which the robot 2 holds the holding target object 80. In this case, the first holding mode inference model 50 and the second holding mode inference model 60 infer and output the type of a hand used to hold the holding target object 80.

### <Example of Non-G output and Grasp output>

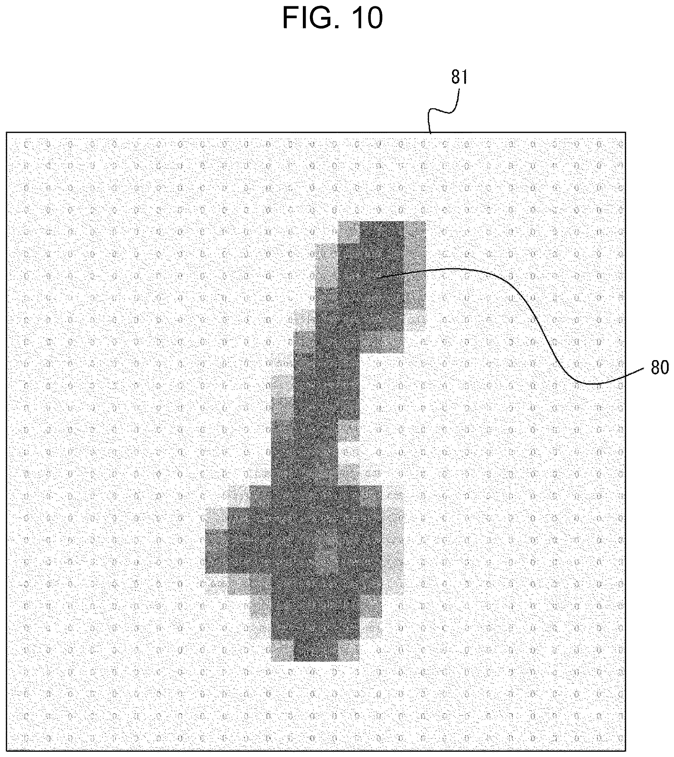

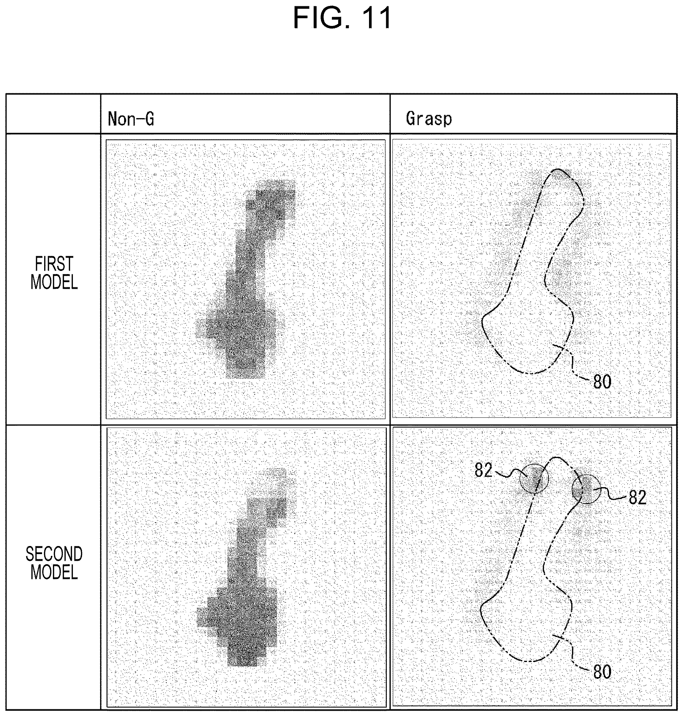

It is assumed that the shape image 81 illustrated in FIG. 10 is input as a target object image to the trained model. In this case, the trained model outputs information illustrated as an image in the table in FIG. 11, for example. In the table in FIG. 11, information output by the first holding mode inference model 50 is described in the row denoted by "first model". Information output by the second holding mode inference model 60 is described in the row denoted by "second model". Information of Non-G output is described in the column denoted by "Non-G". Information of Grasp output is described in the column denoted by "Grasp".

The information described in the cell located in the row of "first model" and the column of "Non-G" corresponds to the Non-G output that is output by the first Non-G model 50N included in the first holding mode inference model 50. The information described in the cell located in the row of "second model" and the column of "Non-G" corresponds to the Non-G output that is output by the second Non-G model 60N included in the second holding mode inference model 60. It is assumed that the Non-G output indicates that a portion in a color closer to black is not to be touched when held, and a portion in a color closer to white is to be touched when held. The meaning of the color of the Non-G output is not limited thereto. The Non-G output is not limited to an image and may be represented by numerical information.

The information described in the cell located in the row of "first model" and the column of "Grasp" corresponds to the Grasp output that is output by the first Grasp model 50G included in the first holding mode inference model 50. The information described in the cell located in the row of "second model" and the column of "Grasp" corresponds to the Grasp output that is output by the second Grasp model 60G included in the second holding mode inference model 60. In FIG. 11, the shape of the holding target object 80 is indicated by an imaginary line of a two-dot chain line in the Grasp output. The holding positions 82 are indicated by solid-line circles. It is assumed that the Grasp output indicates that a portion in a color closer to black is more appropriate as the holding position 82, and a portion in a color closer to white is more inappropriate as the holding position 82. The meaning of the color of the Grasp output is not limited thereto. The Grasp output is not limited to an image and may be represented by numerical information.

An embodiment of the trained model generation device 10 and the robot control system 100 has been described above. The embodiment of the present disclosure can include an embodiment of, in addition to a method or a program for implementing the system or the device, a storage medium (for example, an optical disc, a magneto-optical disk, a CD-ROM, a CD-R, a CD-RW, a magnetic tape, a hard disk, or a memory card) storing the program.

The implementation form of the program is not limited to an application program such as an object code compiled by a compiler or a program code executed by an interpreter, and may be a form such as a program module incorporated in an operating system. The program may or may not be configured such that all processing is performed only in a CPU on a control board. The program may be configured such that a part or the entirety of the program is executed by another processing unit mounted on an expansion board or an expansion unit added to the board as necessary.

The embodiment according to the present disclosure has been described based on the drawings and examples. Note that a person skilled in the art could make various variations or changes based on the present disclosure. Thus, note that the variations or changes are included in the scope of the present disclosure. For example, the functions or the like included in the individual components or the like can be reconfigured without logical inconsistency. Multiple components or the like can be combined into one component or can be divided.

All the structural elements described in the present disclosure and/or all of the disclosed methods or all the steps of a process may be combined in any combination except for combinations in which these features are mutually exclusive. Each of the features described in the present disclosure may be replaced with an alternative feature serving for an identical, equivalent, or similar purpose, unless explicitly denied. Thus, unless explicitly denied, each of the disclosed features is merely one example of a comprehensive series of identical or equivalent features.

Furthermore, the embodiment according to the present disclosure is not limited to any specific configuration of the above-described embodiment. The embodiment according to the present disclosure may be extended to all novel features described in the present disclosure, or any combination thereof, or all novel methods described, or processing steps, or any combination thereof.

In the present disclosure, descriptions such as "first" and "second" are identifiers for distinguishing corresponding elements from each other. In the present disclosure, the elements distinguished by "first", "second", and the like may have ordinal numbers exchanged with each other. For example, "first" and "second" serving as identifiers may be exchanged between the first class and the second class. The exchange of the identifiers is performed simultaneously. Even after the exchange of the identifiers, the elements are distinguished from each other. The identifiers may be deleted. The elements whose identifiers have been deleted are distinguished from each other by reference signs. The identifiers such as "first" and "second" in the present disclosure alone are not to be used as a basis for interpreting the order of corresponding elements or the existence of identifiers with smaller numbers.

### REFERENCE SIGNS

10 trained model generation device (12: controller, 14: interface)
20 display device
40 class inference model (42: processing layer)
50 first holding mode inference model (52: processing layer, 54: multiplier (541 to 544: first to fourth multipliers), 56: adder)
50N first Non-G model (52N: processing layer, 54N: multiplier)
50G first Grasp model (52G: processing layer, 54G: multiplier)
60 second holding mode inference model (62: processing layer)
60N second Non-G model (62N: processing layer)
60G second Grasp model (62G: processing layer)
80 holding target object (83: screw head, 84: screw shaft)
81 shape image
82 holding position
100 robot control system (2: robot, 2A: arm, 2B: end effector, 3: sensor, 4: camera, 5: robot influence range, 6: work start point, 7: work target point, 110: robot control device)

## Claims

1. A trained model generation method comprising:
generating a trained model by performing learning using learning data comprising a learning image of a learning target object corresponding to a holding target object to be held by a robot, the trained model comprising:
a class inference model configured to infer, based on an inference image of the holding target object, a classification result obtained by classifying the holding target object into a predetermined holding category;
a first holding mode inference model configured to infer, based on the classification result and the inference image, a first holding mode for the holding target object; and
a second holding mode inference model configured to infer, based on the first holding mode and the inference image, a second holding mode for the holding target object.

2. The trained model generation method according to claim 1, wherein the learning data further comprises information regarding a class into which the target object is classified.

3. The trained model generation method according to claim 1 or 2, wherein
the trained model comprises a third holding mode inference model configured to infer, based on the classification result received from the class inference model and an image of the target object, a mode in which the robot is not to hold the target object, and
the second holding mode inference model is configured to infer, further based on an inference result of the third holding mode inference model, a mode in which the robot holds the target object and output the inferred mode.

4. The trained model generation method according to claim 3, wherein
the first holding mode inference model is configured to output a position to be touched when the target object is held, and
the third holding mode inference model is configured to output a position not to be touched when the target object is held.

5. A trained model generation device configured to generate a trained model by performing learning using learning data comprising a learning image of a learning target object corresponding to a holding target object to be held by a robot, the trained model comprising:
a class inference model configured to infer, based on an inference image of the holding target object, a classification result obtained by classifying the holding target object into a predetermined holding category;
a first holding mode inference model configured to infer, based on the classification result and the inference image, a first holding mode for the holding target object; and
a second holding mode inference model configured to infer, based on the first holding mode and the inference image, a second holding mode for the holding target obj ect.

6. A trained model comprising:
a class inference model configured to infer, based on an inference image of a holding target object to be held by a robot, a classification result obtained by classifying the holding target object into a predetermined holding category;
a first holding mode inference model configured to infer, based on the classification result and the inference image, a first holding mode for the holding target object; and
a second holding mode inference model configured to infer, based on the first holding mode and the inference image, a second holding mode for the holding target obj ect.

7. A holding mode inference device configured to infer, using a trained model, a mode in which a robot holds a target object, the trained model comprising:
a class inference model configured to infer, based on an inference image of a holding target object to be held by the robot, a classification result obtained by classifying the holding target object into a predetermined holding category;
a first holding mode inference model configured to infer, based on the classification result and the inference image, a first holding mode for the holding target object; and
a second holding mode inference model configured to infer, based on the first holding mode and the inference image, a second holding mode for the holding target obj ect.
